(19) Europäisches Patentamt
European Patent Office
Office européen des brevets

(11) **EP 0 569 813 B1**

(12) **EUROPÄISCHE PATENTSCHRIFT**

(45) Veröffentlichungstag und Bekanntmachung des Hinweises auf die Patenterteilung:
**26.06.1996 Patentblatt 1996/26**

(51) Int. Cl.$^6$: **C01B 33/148**, B01D 71/00, B01J 13/00

(21) Anmeldenummer: **93107148.4**

(22) Anmeldetag: **03.05.1993**

(54) **Verfahren zur Herstellung und Konzentrierung von Kieselsolen**

Method for producing and concentrating silica sols

Procédé pour fabriquer et concentrer des sols de silice

(84) Benannte Vertragsstaaten:
**DE ES FR GB IT SE**

(30) Priorität: **15.05.1992 DE 4216119**

(43) Veröffentlichungstag der Anmeldung:
**18.11.1993 Patentblatt 1993/46**

(73) Patentinhaber: **BAYER AG**
**51368 Leverkusen (DE)**

(72) Erfinder:
• **Brekau, Uwe, Dr.**
**W-5000 Köln 80 (DE)**

• **Nickel, Andreas, Dipl.-Ing.**
**W-5802 Wetter 4 (DE)**
• **Block, Hans-Dieter, Dr.**
**W-5090 Leverkusen 3 (DE)**
• **Moretto, Hans-Heinrich, Dr.**
**W-5090 Leverkusen 1 (DE)**
• **Schmidt, Peter, Dr.**
**W-5090 Leverkusen 3 (DE)**
• **Schober, Peter, Dr.**
**W-5090 Leverkusen 1 (DE)**
• **Ludovici, Werner, Dr.**
**W-5068 Odenthal (DE)**

(56) Entgegenhaltungen:
**US-A- 3 947 376          US-A- 4 915 870**

# Beschreibung

Die Erfindung betrifft ein Verfahren zur Herstellung und Konzentrierung von alkalischen Kieselsolen mit nicht aggregierten, sphärischen $SiO_2$-Partikeln eines Durchmessers von $\geq$ 4 nm ausgehend von $SiO_2$-Konzentrationen von 4 bis 8 Gew.-% unter Verwendung von mikroporösen Membranfiltern.

Für viele industrielle Anwendungen, wie z.B. als Hochtemperaturbindemittel, werden stabile, $SiO_2$-haltige Produkte in Form von Solen, sogenannten Kieselsolen, benötigt. Der aktive Inhaltsstoff des Produktes, das $SiO_2$, muß in einer möglichst hohen Konzentration in Form von diskreten, sphärischen, nicht aggregierten Partikeln vorliegen. Der Vorteil eines solchen Produktes ist offensichtlich; Transport- und Lagerkosten beispielsweise stehen in umgekehrtem Verhältnis zur $SiO_2$-Konzentration des Produktes.

So beschreibt DE-OS 1 667 645 die Herstellung eines Kieselsols mit einem mittleren Partikeldurchmesser von 15-150 nm und einem $SiO_2$-Gehalt von 45-55 Gew.-%. Hierzu wird aus einer wäßrigen, alkalischen Lösung bei erhöhtem Druck (472-9443 kPa) Wasser verdampft, wobei gleichzeitig zur Aufrechterhaltung eines konstanten Volumens ein saures, aktives Kieselsol, welches Partikel eines mittleren Durchmessers unterhalb von 5 nm enthält, zugegeben wird.

Aus DE-OS 16 67 675 geht ein Herstellverfahren von Kieselsolen mit geringem Natriumeinschluß und erhöhter Partikelgröße hervor. In diesem Verfahren wird saures Frischsol in die Vorlage eines alkalischen Kieselsols gegeben und Natriumsilikatlösung wird so zugeführt, daß der pH-Wert zwischen 8,5 und 9,5 liegt. Die Konzentrierung erfolgt durch Wasserverdampfung.

US 3 673 104 und US 3 947 376 beschreiben einstufige, diskontinuierliche Verfahren zur Herstellung von alkalischen Kieselsolen in bevorzugt wäßrigem Medium mit einem $SiO_2$-Gehalt von mindestens 35 Gew.-%. Die $SiO_2$-Partikel in den dort beschriebenen Verfahren weisen mittlere Partikeldurchmesser von 45 bis 100 nm auf, sind sphärisch und nicht aggregiert.

Zur Konzentrierung von nach herkömmlichen und dem Fachmann bekannten Methoden hergestellten Kieselsolen wird üblicherweise die Wasserverdampfung bei Siedetemperatur des Sols herangezogen (US 2 574 902, US 3 440 175). Die Wasserverdampfung erfordert Jedoch insbesondere bei Siedetemperaturen bei atmosphärischem Druck einen erheblichen Energieaufwand und ist demzufolge von wirtschatlichem Nachteil.

Es sind deswegen Versuche zur Konzentrierung von Kieselsolen mit weniger energieaufwendigen Verfahren, wie z.B. unter Verwendung von mikroporösen Membranfiltern, die auch als Ultrafilter bezeichnet werden, unternommen worden.

DE-OS 2 134 974 beschreibt ein Verfahren zur Herstellung von Kieselsol aus Natriumsilikat und einer Säure, wobei die Verfahrensschritte der Konzentrierung (= Entfernung von Lösungsmittel) und der Entfernung der im Sol enthaltenen Salze in einer Membranfiltrationsanlage durchgeführt werden. Die Salzkonzentration muß bei der in DE-OS 2 134 974 beschriebenen Membranfiltration in engen Grenzen gehalten und demzufolge ständig überprüft werden, da die Gefahr der Verfestigung des Sols besteht, sobald eine gewisse Salzkonzentration überschritten wird. Die Notwendigkeit der ständigen Wasserzufuhr und damit der erhöhten Wasserentfernung durch Ultrafiltration und des Einsatzes größerer Membranflächen, die ständige Kontrolle der Salzkonzentration und die Gefahr der Verfestigung des Sols beeinträchtigen das Verfahren erheblich.

Aufgabe war es daher, ein Verfahren zur Verfügung zu stellen, das es gestattet, Kieselsole wirtschaftlich günstig mit geringem Energieeinsatz und technisch einfach herzustellen und aufzukonzentrieren.

Gegenstand der Erfindung ist ein kontinuierliches Verfahren zur Herstellung wäßriger, alkalischer Kieselsole mit einem Wassergehalt von 50 - 95 Gew.-%, die nicht aggregierte, kugelförmige $SiO_2$-Partikel enthalten, aus saurem Frischsol, welches 4 - 8 Gew.-% $SiO_2$ in Form von Teilchen mit einem mittleren Teilchendurchmesser von 2 - 4 nm bei einem pH-Wert von 2 - 4 enthält und welches durch Zusammenbringen einer Alkalisilikatlösung mit einem Kationenaustauscherharz in der H-Form hergestellt wurde, dieses saure Frischsol zu einer Vorlage gegeben wird, die eine wäßrige, alkalische, kolloidale Kieselsollösung mit einem pH-Wert von $\geq$ 8, einem $SiO_2$-Gehalt von 2 - 14 Gew.-% und einer durchschnittlichen Partikelgröße von 4 - 16 nm enthält, dieser Vorlage bei Temperaturen $\geq$ 60°C gleichzeitig alkalische Agenzien zugesetzt werden und die Menge an alkalischen Agenzien so bemessen wird, daß der pH-Wert während des gesamten Verfahrens nicht unter 8 fällt, und der Zusatz an saurem Frischsol und alkalischen Agenzien solange fortgesetzt wird, bis die Partikel einen mittleren Durchmesser von $\geq$ 4 nm aufweisen und eine Konzentrierung der so hergestellten, wäßrigen, alkalischen Kieselsole erfolgt, welches dadurch gekennzeichnet ist, daß

A) der Prozeß der Partikelvergrößerung in einer mehrstufigen Reaktionskaskade kontinuierlich ausgeführt wird, wobei die erste Stufe die Vorlage enthält und der jeweils nächste Reaktor der Kaskade durch Überlauf aus dem vorangehenden versorgt wird, das saure Frischsol den Reaktoren und die alkalischen Agenzien dem ersten oder den ersten Reaktoren kontinuierlich zugeführt werden,

B) die Konzentrierung mittels Ultrafiltration bei turbulenten Strömungsverhältnissen durchgeführt wird, wobei eine alkalisch stabile Membran einer Trenngrenze von kleiner als 30.000, vorzugsweise von kleiner als 15.000 Dalton eingesetzt wird.

Als alkalische Agenzien werden vorzugsweise alkalische Natriumsilikatlösung, alkalische Kaliumsilikatlösung, Natronlauge oder Kalilauge zugesetzt.

Die Ultrafiltration wird bevorzugt bei einem Druck von 3 bis 30 bar, vorzugsweise bei 5 bis 15 bar, und einer Temperatur von 15 bis 35°C, vorzugsweise bei Raumtemperatur, ausgeführt.

Die Permeatflüsse liegen unter den oben erwähnten Bedingungen bei 10 bis 100 l/m²h
Der $SiO_2$-Rückhalt liegt bei mehr als 99 %.

Vorzugsweise werden bezüglich des Porendurchmessers symmetrische oder asymmetrische Membranen aus homogenen Materialien oder aus Compositmaterialien, sogenannte Mehrschichtmembranen, eingesetzt.

Die Membranen bestehen vorzugsweise aus organischen Polymermaterialien oder aus anorganischen Materialien, vorzugsweise aus Keramik oder Graphit.

Die Teilchengröße der $SiO_2$-Patikel läßt sich mit dem Elektronenmikroskop bestimmen. Die mittlere Partikelgröße D der Teilchen ist auch aus der nach G.W. Sears (Analytical Chemistry, 28 (1981) 1956) bestimmten spezifischen Oberfläche O gemäß der nachfolgenden Formel (vgl. R.K. Iler, "The Chemistry of Silica", Wiley, New York 1979) zu errechnen.

$$D = \frac{6}{f * O} * 1000$$

Dabei ist D der mittlere Durchmesser einer Oberflächenverteilung in nm, O die spezifische Oberflache in m²/g und f die Dichte der $SiO_2$-Partikel. Zur Vereinfachung ist mit der idealen Dichte von amorphem $SiO_2$ zu rechnen, welche 2,2 g/ml beträgt.

Die Anwendung der Ultrafiltrationstechnologie zur Konzentrierung von Kieselsolen bringt einige systemspezifische Probleme mit sich: Die zur Ultrafiltration gelangenden, verdünnten Kieselsole dürfen nur einen geringen Anteil an aggregierten Partikeln, sogenanntes Mikrogel, enthalten. Höhere Mikrogelgehalte bewirken einen rascheren Anstieg der Viskosität beim Konzentrierungsvorgang, so daß unter Umständen die gewünschte Endkonzentration nicht erreicht wird, sondern sich das Sol vorher verfestigt und damit unbrauchbar wird. Hohe Mikrogelgehalte stören den Wasserdurchgang durch die Membran und bedingen die Notwendigkeit häufigerer Reinigungsoperationen.

Wird das zur Ultrafiltration eingesetzte Kieselsol nach dem beanspruchten Verfahren hergestellt, so ist gewährleistet, daß keine störenden Mikrogelgehalte vorhanden sind. Eine Konzentrierung der Kieselsole auf mindestens 30 Gew.-% $SiO_2$ kann ohne Störungen bei Drücken von 3 bis 30 bar, vorzugsweise im Bereich von 5 bis 15 bar mit der beanspruchten Filtration vorgenommen werden.

Zur Ultrafiltration wird ein Membranfilter verwendet, dessen Poren einen Durchmesser in der Größe besitzen, daß Wassermoleküle und wasserlösliche Salze noch die Poren passieren, die enthaltenen kolloidalen $SiO_2$-Teilchen jedoch gerade zurückgehalten werden. Wird eine Membran mit einem kleineren Porendurchmesser verwendet, werden zwar die kolloidalen Siliziumdioxidpartikel auch zurückgehalten, zur Filtration sind aber höhere und damit unvorteilhaftere Drücke erforderlich, um ähnliche Filtrationsgeschwindigkeiten zu erreichen, Geeignete Membranen sind solche mit Trenngrenzen kleiner als 30.000 Dalton, vorzugsweise kleiner als 15.000 Dalton. Die eingesetzten Membranen bestehen vorzugsweise aus organischem Polymermaterial oder anorganischen Materialien, wie z.B. Keramik oder Graphit. Für die erfindungsgemäße Konzentrierung sind vorzugsweise asymmetrische oder symmetrische Membranen aus einheitlichen Materialien oder Mehrschichtmembranen geeignet.

Die zur Konzentrierung der Kieselsole geeigneten Membranen werden in handelsüblichen Modulen (Apparaten), vorzugsweise in Rohrmodulen, im erfindungsgemäßen Verfahren eingesetzt. Im Laufe der Standzeit der Membran kommt es zur Ablagerung von Siliziumdioxid auf der Membranoberfläche, Diese Ablagerungen hemmen den Permeatfluß. Die Membranaktivität kann durch Einwirkung von warmer (ca. 50°C), verdünnter Alkalilösung, vorzugsweise Natronlauge regeneriert werden. Demzufolge ist es zur Erzielung möglichst langer und wirtschaftlich vorteilhafter Standzeiten günstig, wenn die verwendeten Membranen und Apparate alkalistabil sind,

Das zur Konzentrierung der Ultrafiltration zu unterwerfende Kieselsol ist im Kreislauf an der Oberfläche der Membran vorbeizuleiten. An der Membranoberfläche entsteht eine turbulente Strömung. Diese Strömungsverhältnisse wirken einer Konzentrationspolarisation entgegen. Die Aufrechterhaltung besagter, turbulenter Strömungsverhältnisse ist besonders vorteilhaft, da das enthaltene Siliziumdioxid bei höheren Konzentrationen zur Gelbildung neigt, welche sich störend auf die Membranfiltration auswirkt.

Der bei der Membranfiltration anzuwendende Druck ist nicht über einen Wert zu steigern, bei dem ein wirtschaftlich praktikabler Permeatfluß auftritt, da zu hohe Drücke die Bildung besagter höherer $SiO_2$-Konzentrationen in der Nähe der Membranoberfläche begünstigen.

Die Filtrationsgeschwindigkeit steigt bei Temperaturerhöhung beträchtlich an, doch ist die Filtration des alkalischen Kieselsols bei Temperaturen oberhalb von 35°C weniger vorteilhaft, da hierdurch eine Dauerbelastung der Membran mit dem heißen alkalischen Kieselsol resultieren würde, welche eine erhebliche Beanspruchung der Membran darstellt. Befriedigende Permeatflüße von 10 bis 100 l/m²h werden auch bereits bei Temperaturen von 20 bis 30°C erreicht.

Die Ultrafiltration kann auch in einer Reihe von hintereinander geschalteten Filtern erfolgen.

Der Prozeß der Partikelvergrößerung erfolgt in einer mehrstufigen Reaktionskaskade, vorzugsweise in einer mindestens dreistufigen. In den Reaktoren werden bei Verwendung von drei Stufen bevorzugt folgende stationäre Betriebszustände eingestellt:

Reaktor 1:    pH-Wert 9,0-12,0
                mittlere Partikelgröße 4-20 nm
                mittlere Verweilzeit 10 min.-2 h
                $SiO_2$-Konzentration 2-15 Gew.-%

Reaktor 2:    pH-Wert 8,5-11,0
mittlere Partikelgröße 6-30 nm
mittlere Verweilzeit 10 min.-2 h
$SiO_2$-Konzentration 6-30 Gew.-%

Reaktor 3:    pH-Wert 8,5-10,5
mittlere Partikelgröße 9-55 nm
mittlere Verweilzeit 4 h-10 h
$SiO_2$-Konzentration 7-50 Gew.-%

Die Konzentrationen werden bevorzugt durch Verdampfung einer Wassermenge eingestellt, die geringer ist als die zugeführte Menge.

Die Erfindung wird anhand von einigen Beispielen näher erläutert,

Beispiel 1

Herstellung

Die Apparatur, die hier Anwendung findet, besteht aus drei hintereinander angeordneten und miteinander verbundenen Reaktoren aus Glas Die Reaktoren 1 und 2 sind als Überlaufreaktoren konstruiert, Reaktor 3 besitzt einen Bodenablauf. Der Inhalt der Reaktoren ist bei Siedetemperatur bis zum Überlauf gemessen und beträgt für Reaktor 1:783 ml und für Reaktor 2:617 ml. Der dritte Reaktor besitzt ein nutzbares Volumen von 30 l.

Der Inhalt jedes Reaktionsgefäßes wird mit Propellerrührer durchmischt. Die Beheizung des Reaktorinhaltes erfolgt indirekt mit Dampf. Zu diesem Zwecke sind im Innern der Reaktoren dampfdurchströmte Metallschlangen aus VA-Stahl angebracht. Die Brüden werden für Reaktor 2 über einen Wasserkühler geführt, kondensiert und anschließend gemessen. Die Reaktoren 1 und 3 arbeiten unter Rückfluß. Der Dampfdruck des Heizdampfes, mit dem die aus den einzelnen Reaktoren abzudestillierende Wassermenge bzw. die Temperatur zu regulieren ist, wird mit einem geeigneten Nadelventil und einem entsprechenden Kondensatabscheider auf einem konstanten Wert gehalten.

Die Heizschlangen der Reaktoren sind in Parallelschaltung an eine Hauptdampfleitung angeschlossen. Jedes der vorab beschriebenen Reaktionsgefäße ist mit einem eigenen Kondensatabscheider versehen, um aus jedem der Reaktoren festgelegte unterschiedliche Wassermengen verdampfen zu können, bzw. genau definierte Temperaturen halten zu können.

In den ersten Reaktor wird mit einer Zugabevorrichtung eine wie beispielsweise in US 2 244 325 hergestellte Lösung von saurem Frischsol gegeben. Mit einer Dosiervorrichtung ist ebenso die Zugabe der alkalischen Agenzlösung, wie z.B. Metallhydroxid- oder Metallsilikatlösung, vorzugsweise einer Lösung von Natriumsilikat, in den ersten Reaktor möglich.

Um die Lagerstabilität, d.h. die Zeitdauer der Lagerfähigkeit der sauren Lösung des aktiven Silikates zu erhöhen, wird besagte Lösung von Kieselsäurefrischsol auf Temperaturen von 4-10°C gekühlt.

Der stationäre Zustand in den ersten beiden Reaktoren ist bei einer mittleren Verweilzeit von 12 min. im 1. Reaktor und 14 min. im 2. Reaktor durch die Zugabe von 3604 ml Kieselsäurefrischsol mit 6 Gew.-% $SiO_2$ pro Stunde in den ersten Reaktor und 176 ml verdünnter alkalischer Natronwasserglaslösung pro Stunde (mit 6 Gew.-% $SiO_2$) in Reaktor 1 aufrecht zu erhalten. Die Temperatur im ersten Reaktor beträgt 74°C, im 2. und 3. Reaktor herrscht Siedetemperatur. Aus dem 2. Reaktor werden pro Stunde 1116 ml Wasser abdestilliert. Ist der 3. Reaktor befüllt, wird das aus Reaktor 2 überlaufende Kieselsol in einen weiteren bauartgleichen Reaktor geleitet. Das Sol aus Reaktor 3 wird durch Ultrafiltration konzentriert, sobald eine spezifische Oberfläche von 300 $m^2$/g erreicht ist.

Im stationären Betriebszustand der kontinuierlich arbeitenden Apparatur ergeben sich dann für alle Reaktoren spezifische pH-Werte. Der pH-Wert beträgt in Reaktor 1: 9,2, in Reaktor 2: 9,5, im 3. Reaktor 10. Die $SiO_2$-Konzentrationen in den Solen im stationären Zustand betragen im 1. Reaktor 6 Gew.-%, im 2. Reaktor 8 Gew.-%. Im 3. Reaktor beträgt die $SiO_2$-Konzentration ebenfalls 8 Gew.-%.

Die spezifische Oberfläche des Sols stellt sich ein im 1. Reaktor auf 569 $m^2$/g, im 2. Reaktor auf 464 $m^2$/g und im 3. Reaktor auf 300 $m^2$/g.

Die spezifische Oberfläche des während insgesamt 80 Betriebsstunden unter diesen Bedingungen erhaltenen Kieselsols lag bei 300 $m^2$/g. Der pH-Wert betrug 10,0, die Viskosität betrug 3,5 mPas bei 20°C und die $SiO_2$-Konzentration lag bei 30 Gew.-%.

Zum Anfahren der Reaktionskaskade wird jeweils der erste Reaktor mit dem aufbewahrten Inhalt des ersten Reaktors der letzten Fahrperiode befüllt.

Durch Zugabe der Frischsol- und Natronwasserglasmengen und durch Abdampfen der definierten Mengen Wasser wird der stationäre Betriebszustand eingestellt und durch Überlauf der 2. Reaktor befüllt, Ist der zweite Reaktor befüllt, wird hier der stationäre Betriebszustand eingestellt und durch Überlauf der nächstfolgende Reaktor befüllt usw..

Konzentrierung

Ein Kieselsol mit einer $SiO_2$-Konzentration von 8 Gew.-% enthaltend Partikel eines Durchmessers von 5-20 nm wird bei einer Temperatur von 25°C durch ein Ultrafilter mit einer Filtrationsfläche von 44 $cm^2$ filtriert. Die Überströmung der Testzelle erfolgt mit 500 l/h. Dadurch werden turbulente Strömungsverhältnisse hervorgerufen. Der auf die Membran wirkende Flüssigkeitsdruck lag bei einem Mittelwert von 10 bar. Als Apparatur wird eine Filtrationsvorrichtung vom Typ TZ der Firma Amafilter (Hannover) verwendet.

Die Ultrafiltrationsmembran ist eine asymmetrische, aus organischem Polymermaterial aufgebaute Membran mit einer Trenngrenze von 3000 g/mol. (Diese Membran wird unter der Bezeichnung Desal G 20 von der Firma Desalination Systems Inc., Aarau hergestellt.) Der Permeatfluß durch die Membran beträgt in Abhängigkeit von der Konzentration 30 - 100 l/m²h. Nach ca. 10 Betriebsstunden ist der Permeatfluß durch die Membran bei einem Wert angelangt, der in erster Näherung linear konzentrationsabhängig ist. Nach Erreichen einer $SiO_2$-Konzentration von ca. 30 Gew.-% wird die Anlage mit Permeatrückführung weitere 15 h im Kreis gefahren: Nach Konzentrierungsende fällt der Fluß nicht weiter ab, die Membran arbeitet stabil.

Nach Versuchsende wird in der gespülten Anlage der Reinwasserfluß der Membran bestimmt. Das Ergebnis liegt im Bereich des Nennwertes für die Membran.

Das erhaltene Kieselsol hatte eine Viskosität von 3,5 mPas, bestimmt mit dem Höppler-Kugelfallviskosimeter bei 20°C. Der pH-Wert des Kieselsols beträgt 10. Die Leitfähigkeit des Produktes liegt bei 4,7 mS, der $Na_2O$-Gehalt in der Lösung beträgt 0,34 Gew.-%. Der Kieselsolrückhalt durch die Desal G 20-Membran beträgt über 99,5 %.

Vergleichsbeispiel 1

Das nach Beispiel 1 hergestellte Kieselsol mit einem $SiO_2$-Gehalt von 8 Gew.-% wird einer Ultrafiltration bei 25°C unterworfen.

Die Konzentrierung wird in einer Laboranlage der Fa. Amafilter, Hannover (Typ TZ) durchgeführt.

Die Filtrationsfläche des Ultrafilters beträgt 44 cm². Die Überströmung der Testzelle erfolgt mit 500 l/h.

Die verwendete Ultrafiltrationsmembran ist eine asymmetrische, aus organischem Polymermaterial aufgebaute Membran mit einer Trenngrenze von 0,100 micron. (Diese Membran wird unter der Bezeichnung K 150 von der Fa. Desalination Systems Inc., Aarau hergestellt).

Die Trennleistung der Membran ist nicht ausreichend, es gelangen deutliche Mengen kolloidales $SiO_2$ ins Permeat.

**Patentansprüche**

1. Kontinuierliches Verfahren zur Herstellung wäßriger, alkalischer Kieselsole mit einem Wassergehalt von 50-95 Gew.-%, die nicht aggregrierte, kugelförmige $SiO_2$-Partikel enthalten, aus saurem Frischsol, welches 4-8 Gew.-% $SiO_2$ in Form von Teilchen mit einem mittleren Teilchendurchmesser von 2-4 nm bei einem pH-Wert von 2-4 enthält und welches durch Zusammenbringen einer Alkalisilikatlösung mit einem Kationenaustauscherharz in der H-Form hergestellt wurde, dieses saure Frischsol zu einer Vorlage gegeben wird, die eine wäßrige, alkalische, kolloidale Kieselsollösung mit einem pH-Wert von ≧ 8, einem $SiO_2$-Gehalt von 2-14 Gew.-% und einer durchschnittlichen Partikelgröße von 4-16 nm enthält, dieser Vorlage bei Temperaturen ≧ 60°C gleichzeitig alkalische Agenzien zugesetzt werden und die Menge an alkalischen Agenzien so bemessen wird, daß der pH-Wert während des gesamten Verfahrens nicht unter 8 fällt, und der Zusatz an saurem Frischsol und alkalischen Agenzien solange fortgesetzt wird, bis die Partikel einen mittleren Durchmesser von ≧ 4 nm aufweisen und eine Konzentrierung der so hergestellten, wäßrigen, alkalischen Kieselsole erfolgt, dadurch gekennzeichnet, daß

A) der Prozeß der Partikelvergrößerung in einer mehrstufigen Reaktionskaskade kontinuierlich ausgeführt wird, wobei die erste Stufe die Vorlage enthält und der jeweils nächste Reaktor der Kaskade durch Überlauf aus dem vorangehenden versorgt wird, das saure Frischsol den Reaktoren und die alkalischen Agenzien dem ersten oder den ersten Reaktoren kontinuierlich zugeführt werden,

B) die Konzentrierung mittels Ultrafiltration bei turbulenten Strömungsverhältnissen durchgeführt wird, wobei eine alkalisch stabile Membran einer Trenngrenze von kleiner als 30.000, vorzugsweise von kleiner als 15.000 Dalton eingesetzt wird.

2. Verfahren nach Anspruch 1, dadurch gekennzeichnet. daß die Ultrafiltration bei einem Druck von 3 bis 30 bar, vorzugsweise 5 bis 15 bar, und einer Temperatur von 15 bis 35°C, vorzugsweise bei Raumtemperatur ausgeführt wird.

3. Verfahren nach Anspruch 1 oder 2, dadurch gekennzeichnet, daß der $SiO_2$-Rückhalt bei mehr als 99 % liegt.

4. Verfahren nach einem oder mehreren der Ansprüche 1 bis 3, dadurch gekennzeichnet, daß asymmetrische oder symmetrische Membranen aus homogenen Materialien oder aus Compositmaterialien, sogenannte Mehrschichtmembranen, eingesetzt werden.

5. Verfahren nach einem oder mehreren der Ansprüche 1 bis 4, dadurch gekennzeichnet, daß die Membranen aus organischen Polymermaterialien oder aus anorganischen Materialien, vorzugsweise aus Keramik oder Graphit, bestehen.

**Claims**

1. Continuous method for producing aqueous, alkaline silica sols with a water content of 50 - 95 wt %, which contain non-aggregated, spherical $SiO_2$ particles, from fresh, acid sol which contains 4 - 8 wt % of $SiO_2$ in the form of particles with a mean particle diameter of 2 - 4 nm at a pH value of 2 - 4 and which has been produced by bringing together an alkali silicate solution with a cation exchange resin in the H form, said fresh, acid sol is added to a receiver which contains an aqueous, alkaline, colloidal silica sol solution with a pH value of $\geq 8$, an $SiO_2$ content of 2 - 14 wt % and a mean particle size of 4 - 16 nm, alkaline agents are added simultaneously to this receiver at temperatures of $\geq 60$ °C and the amount of alkaline agents is so proportioned that the pH value does not fall below 8 during the entire method, and the addition of acid, fresh sol and alkaline agents is continued until such time as the particles possess a mean diameter of $\geq 4$ nm and a concentrating of the aqueous, alkaline silica sols produced in this way takes place, characterised in that

A) the process of the particle enlargement is carried out continuously in a multi-stage reaction cascade, wherein the first stage contains the receiver and the next reactor of the cascade is supplied in each case by overflow from the preceding one, the fresh, acid sol is supplied continuously to the reactors and the alkaline agents are supplied continuously to the first reactor or the first reactors,
B) the concentrating is carried out by ultrafiltration in turbulent flow conditions, wherein an alkali- stable membrane with a separation limit of less than 30 000, preferably of less than 15 000, Dalton is used.

2. Method according to claim 1, characterised in that the ultrafiltration is carried out at a pressure of 3 to 30 bar, preferably 5 to 15 bar, and a temperature of 15 to 35 °C, preferably at room temperature.

3. Method according to claim 1 or 2, characterised in that the $SiO_2$ retention comes to more than 99%.

4. Method according to one or more of claims 1 to 3, characterised in that asymmetrical or symmetrical membranes of homogeneous materials or of composite materials, so-called multi-layer membranes, are used.

5. Method according to one or more of claims 1 to 4, characterised in that the membranes consist of organic polymer materials or of inorganic materials, preferably of ceramic or graphite.

**Revendications**

1. Procédé continu de production de sols de silice alcalins aqueux ayant une teneur en eau de 50 à 95 % en poids, contenant des particules de $SiO_2$ sphériques non agrégées, à partir d'un sol frais acide contenant 4 à 8 % en poids de $SiO_2$ sous forme de particules ayant un diamètre moyen de 2 à 4 nm à un pH de 2 à 4, préparé par mise en contact d'une solution de silicate de métal alcalin avec une résine échangeuse de cations à la forme H, ce sol frais acide étant introduit dans un récipient contenant une solution de sol de silice colloïdale alcaline aqueuse

ayant un pH $\geq 8$, une teneur en $SiO_2$ comprise entre 2 et 14 % en poids et une dimension moyenne de particule de 4 à 16 nm, des agents alcalins étant simultanément ajoutés à ce récipient à des températures $\geq 60$°C et la quantité d'agents alcalins étant dosée de façon que le pH ne tombe pas en dessous de 8 pendant tout le procédé, et l'addition de sol frais acide et d'agents alcalins étant poursuivie jusqu'à ce que les particules présentent un diamètre moyen $\geq 4$ nm et qu'ait lieu une concentration des sols de silice alcalins aqueux ainsi produits, caractérisé en ce que

A) le processus de grossissement des particules s'effectue continûment en une cascade de réactions à plusieurs étapes, la première étape comprenant la quantité introduite et chacun des réacteurs suivants de la cascade étant alimenté par le trop-plein du précédent, le sol frais acide étant acheminé continûment aux réacteurs et les agents alcalins au(x) premier(s) réacteur(s),
B) la concentration est effectuée par ultrafiltration dans des conditions d'écoulement turbulent, une membrane stable aux alcalis à point de coupure inférieur à 30 000 Daltons, de préférence inférieur à 15 000 Daltons, étant utilisée.

2. Procédé selon la revendication 1, caractérisé en ce que l'ultrafiltration s'effectue à une pression de 3 à 30 bar, de préférence de 5 à 15 bar, et à une température de 15 à 35°C, de préférence à la température ambiante.

3. Procédé selon les revendications 1 ou 2, caractérisé en ce que la quantité de $SiO_2$ retenue est supérieure à 99 %.

4. Procédé selon une ou plusieurs des revendications 1 à 3, caractérisé en ce qu'on utilise des membranes asymétriques ou symétriques en matériaux homogènes ou en composites, des membranes dites multicouches.

5. Procédé selon une ou plusieurs des revendications 1 à 4, caractérisé en ce que les membranes sont en polymères organiques ou en matériaux inorganiques, de préférence en céramique ou en graphite.